# FASCICULE DE BREVET EUROPEEN

(11) **EP 2 841 321 B1**
(45) Date de publication et mention de la délivrance du brevet: **03.08.2016**
(21) Numéro de dépôt: 13719785.1
(22) Date de dépôt: 23.04.2013
(51) Int. Cl.: B62B 7/06, B62B 7/04, B62B 7/14, B60B 35/10

(54) **CHASSIS POUR UNE POUSSETTE ET POUSSETTE A CINEMATIQUE DE PLIAGE AMELIOREE**
KINDERWAGENRAHMEN SOWIE KINDERWAGEN MIT VERBESSERTER KLAPPVORRICHTUNG
BABY STROLLER FRAME AND BABY STROLLER WITH AN IMPROVED FOLDING MECHANISM

(30) Priorité: 23.04.2012 FR 1253700
(43) Date de publication de la demande: 04.03.2015
(73) Titulaire: Dorel France, 49309 Cholet Cedex (FR)
(72) Inventeur: ZWEIDECK, Bruno, F-49300 Cholet (FR); NASLAIN, Yann, F-49300 Cholet (FR); CHIFFOLEAU, Vincent, F-85290 Mortagne-sur-Sevre (FR)
(74) Mandataire: Vidon Brevets & Stratégie
(86) Numéro de dépôt international: PCT/EP2013/058409
(87) Numéro de publication internationale: WO 2013/160314

(56) Documents cités:
- EP-A1- 1 970 282
- WO-A1-2008/103616
- DE-U1-202007 014 299
- US-A1- 2002 041 083
- US-A1- 2002 070 531
- US-A1- 2007 075 525

## Description

### 1. Domaine de l'invention

Le domaine de l'invention est celui de la puériculture, et plus précisément des voitures d'enfants ou poussettes.

### 2. Art antérieur

Les poussettes pour enfant mettent généralement en oeuvre un châssis pliant, pouvant prendre une position pliée dans laquelle il présente un volume réduit, permettant son rangement, et une position de transport dans laquelle il peut recevoir un enfant.

Cet enfant est installé dans un dispositif de réception d'un enfant, qui peut notamment être un siège, un hamac, une nacelle, une coque, une assise...

Ce dispositif de réception est relié au châssis par l'intermédiaire de moyens de support, de façon fixe ou amovible (par exemple par l'intermédiaire d'éléments Moduloclip® ou similaire).

Le châssis porte par ailleurs des roues permettant le déplacement de la poussette. Il existe en particulier des poussettes à quatre roues et des poussettes à trois roues (généralement deux roues arrière et une roue avant). Dans la présente description, ainsi que dans les revendications, le terme « roue » doit s'entendre de façon large, et englobe notamment une roue individuelle ou un bloc de deux roues jumelées.

Parmi les poussettes à trois roues notamment, il existe des poussettes équipées de roues arrière relativement importantes (par exemple d'un diamètre supérieure à 25 cm), et qui présentent un écartement, ou voie, important (par exemple de l'ordre de 70 cm), conférant une bonne stabilité à la poussette, et donc bien adaptées à des usages sur de longues distances et/ou sur des terrains accidentés notamment.

Un inconvénient de ces poussettes est que leur encombrement, dans la position pliée, reste important et ne permet généralement pas, par exemple, un transport aisé dans un véhicule. Un autre inconvénient est que le pliage peut être complexe, et nécessiter des démontages, notamment des roues. Le dépliage est en conséquence également compliqué.

Par ailleurs, du fait de la voie arrière importante, ces poussettes sont difficiles à utiliser en milieu urbain, par exemple sur trottoir, et plus encore en intérieur, par exemple dans une galerie marchande ou un grand magasin. Par exemple, le franchissement d'une porte ou le passage en caisse peut être impossible.

Il existe bien sûr d'autres poussettes, moins encombrantes en position dépliée, pour répondre à ces derniers inconvénients. Mais ces poussettes de plus petites tailles sont essentiellement réservées à un usage urbain et ne sont pas bien adaptées pour un usage dit « outdoor », par exemple sur un chemin de terre, une plage, un sentier en forêt... pour des raisons de stabilité, et de confort de l'enfant et du pousseur.

Chacun des documents DE 20 2007 014299 U1 et WO 2008/3616 décrit un châssis pliant pour poussette selon le préambule de la revendication 1.

Le document EP 2 228 281 A2 décrit un châssis pliant présentant une poutre composée de deux parties télescopiques.

### 3. Objectifs de l'invention

L'invention a notamment pour objectif de pallier au moins certains de ces inconvénients de l'art antérieur.

Plus précisément, un objectif de l'invention est, selon au moins un mode de réalisation, de fournir une poussette présentant une cinématique de pliage et de dépliage simple et efficace, ne nécessitant notamment pas de manipulation complexe ou multiple.

L'invention a également pour objectif, selon au moins un mode de réalisation, de fournir une telle poussette présentant un encombrement très réduit, en position pliée.

Encore un autre objectif de l'invention est, selon au moins un mode de réalisation de l'invention, de fournir une poussette qui soit à la fois adaptée à un usage « outdoor », notamment en terme de stabilité, et utilisable en milieu urbain et en intérieur.

### 4. Exposé de l'invention

Ces objectifs ainsi que d'autres qui apparaîtront par la suite sont atteints, selon un premier aspect de l'invention, à l'aide d'un châssis pliant pour poussette selon la revendication 1.

Ainsi, cette cinématique permet d'obtenir, de façon simple et efficace, un encombrement très réduit de la poussette dans la position pliée, ainsi qu'un mode de pliage très pratique. En effet, bien que la voie des roues arrière varie lors du pliage, la partie supérieure du châssis conserve une largeur constante, en particulier au niveau de l'entraxe entre les moyens de support. Il n'est donc pas nécessaire de retirer le dispositif de réception de l'enfant ni d'agir sur celui-ci, qui n'a pas besoin d'être pliable.

La cinématique de pliage de l'invention combine avantageusement :
- une technique de pliage en trois dimensions pour la partie inférieure du châssis, grâce à la rotation autour d'un axe vertical des moyens de réglage de l'écartement des roues arrière ;
- une technique de pliage en deux dimensions pour la partie supérieure du châssis, grâce à des moyens d'articulation agissant sur le ou les poussoirs, et qui sont mobiles en rotation selon au moins un axe (et éventuellement deux axes, voir ci-après la description d'un mode de réalisation de l'invention) s'étendant sensiblement horizontalement.

Ledit châssis porte au moins une roue avant. La ou lesdites roues avant sont portées par ladite poutre.

Selon l'invention, ladite poutre est composée d'au moins deux portions de poutre mobiles l'une par rapport à l'autre, de façon à pouvoir prendre une position rétractée, dans laquelle la ou lesdites roues avant sont rapprochées des roues arrière, lorsque ledit châssis est dans la position pliée.

La roue avant de la poussette est ainsi rétractable, ce qui permet d'obtenir un encombrement très réduit de la poussette dans sa position pliée. Dans certaines poussettes connues, une telle compacité de la poussette en position pliée ne peut être obtenue qu'en désolidarisant la roue avant du châssis avant pliage. Selon l'invention, ce mécanisme de rétractation de la roue avant permet de s'affranchir de cette étape fastidieuse, tout en assurant un pliage très compact de la poussette.

Lesdites portions de poutre peuvent notamment être assemblées de façon coulissante, de façon à former une poutre télescopique. Les portions de poutre peuvent coulisser l'une dans l'autre, ou l'une sur l'autre.

Le déplacement de la portion de poutre portant la roue avant peut être contrôlé par un levier solidaire d'une chape mobile en rotation, par l'intermédiaire d'une biellette.

Dans un mode de réalisation particulier, chacune desdites roues arrière est portée par un bras porte-roue constitué d'un parallélogramme.

Ceci permet de garantir le parallélisme des roues arrière dans les différentes positions.

Selon un aspect particulier, lesdits moyens de réglage comprennent deux biellettes, reliées chacune à l'un desdits bras porte-roue arrière.

On contrôle ainsi, de façon simple et efficace, l'écartement de roues arrière et les opérations de pliage et de dépliage. Les biellettes, mobiles en rotation par rapport au coulisseau autour d'un axe sensiblement vertical, agissent, lors du déplacement du coulisseau, sur les bras porte-roue arrière, pour modifier l'écartement des roues arrière.

Selon une cinématique particulière, le passage d'une position à l'autre dudit châssis est contrôlé par le déplacement du ou desdits poussoirs.

Selon un aspect particulier, lesdits moyens d'articulation comprennent :
- des moyens d'articulation avant comprenant deux biellettes reliant chacune une extrémité avant de l'un desdits poussoirs audit coulisseau ;
- des moyens d'articulation arrière comprenant deux biellettes reliées chacune audit coulisseau.

De tels moyens d'articulation relient donc la partie supérieure du châssis, comprenant notamment le ou lesdits poussoirs et lesdits moyens de support, et, par l'intermédiaire du coulisseau, la partie inférieure du châssis, portant les roues.

De telles biellettes sont mobiles en rotation par rapport au coulisseau selon un axe sensiblement horizontal.

En outre, dans un mode de réalisation particulier, lesdites biellettes desdits moyens d'articulation arrière relient ledit coulisseau, de chaque côté de ladite poussette, à une chape mobile en rotation, un levier solidaire de ladite chape reliant ladite chape à l'un desdits poussoirs.

Selon un autre aspect particulier, dans ladite position pliée, le ou lesdits poussoirs sont sensiblement parallèles à ladite poutre.

Ceci permet également de réduire l'encombrement de la poussette pliée.

Selon encore un autre aspect particulier, le ou lesdits poussoirs portent un guidon pliable, à l'aide d'articulations et/ou de moyens télescopiques, de façon à limiter l'encombrement de ladite poussette dans ladite position pliée.

Par ailleurs, dans un mode de réalisation particulier, lesdits moyens de support peuvent prendre au moins deux hauteurs distinctes par rapport au(x)dit(s) poussoir(s).

Ceci permet à l'utilisateur de rapprocher l'enfant de lui, en ramenant le dispositif de réception d'un enfant vers le haut, par exemple pour obtenir un meilleur contact visuel, ou au contraire de rabaisser le dispositif, pour augmenter la stabilité. Ceci permet également une adaptation à la taille de l'utilisateur.

Ceci peut notamment être obtenu en montant lesdits moyens de support coulissants le long de glissières prévues à cet effet sur le(s)dit(s) poussoir(s).

Selon un autre aspect de l'invention, le châssis est configuré de façon à pouvoir prendre au moins deux positions de transport d'un enfant, sélectionnables par un utilisateur, dans lesquelles l'écartement entre lesdits moyens de support est constant mais l'écartement entre lesdites roues arrière est différent, dont une position de transport à écartement maximum desdites roues et une position de transport à écartement réduit desdites roues, ledit châssis comprenant des moyens de verrouillage permettant de maintenir ledit châssis dans l'une ou l'autre desdites positions de transport.

Ainsi, une poussette selon l'invention combine, sur un même châssis, les avantages d'au moins deux types de poussettes, en offrant une bonne stabilité pour un usage sur un terrain difficile par exemple, du fait de l'écartement important des roues arrière, lorsque l'écartement est maximum, et la possibilité d'un usage urbain aisé, lorsque cet écartement est réduit. Il est bien sûr possible de définir plus de deux positions de transport, et en particulier une position avec un écartement minimum, permettant ponctuellement de franchir un obstacle étroit.

La mise en oeuvre de l'invention suppose des moyens de verrouillage particuliers, permettant de maintenir le châssis de façon sûre et fiable dans chacune des positions de transport.

Selon un aspect particulier, ledit châssis peut être configuré de façon que la hauteur desdits moyens de support par rapport au sol varie selon la position de transport sélectionnée, de façon à abaisser le centre de gravité de la poussette lorsque ledit châssis passe de la position de transport à écartement maximum à une position de transport à écartement réduit.

Selon les modes de réalisation, lesdits moyens de verrouillage peuvent notamment être prévus entre ledit coulisseau et ladite poutre et/ou entre ladite chape et au moins une des biellettes qui lui est connectée.

L'invention concerne également une poussette présentant un châssis pliant tel que décrit ci-dessus munie d'un dispositif de réception d'un enfant.

### 5. Liste des figures

D'autres caractéristiques et avantages de l'invention apparaîtront plus clairement à la lecture de la description suivante de modes de réalisation de l'invention, donnés à titre de simples exemples illustratifs et non limitatifs, et des figures annexées parmi lesquelles :
- les figures 1A à 1D présentent le châssis d'une poussette ne faisant pas partie de l'invention dans une position de transport, respectivement :
   - figure 1A : vue de derrière ;
   - figure 1B : vue de côté ;
   - figure 1C : vue de devant ;
   - figure 1D : vue de % ;
- les figures 2A à 2E illustrent le même châssis, dans sa position pliée respectivement :

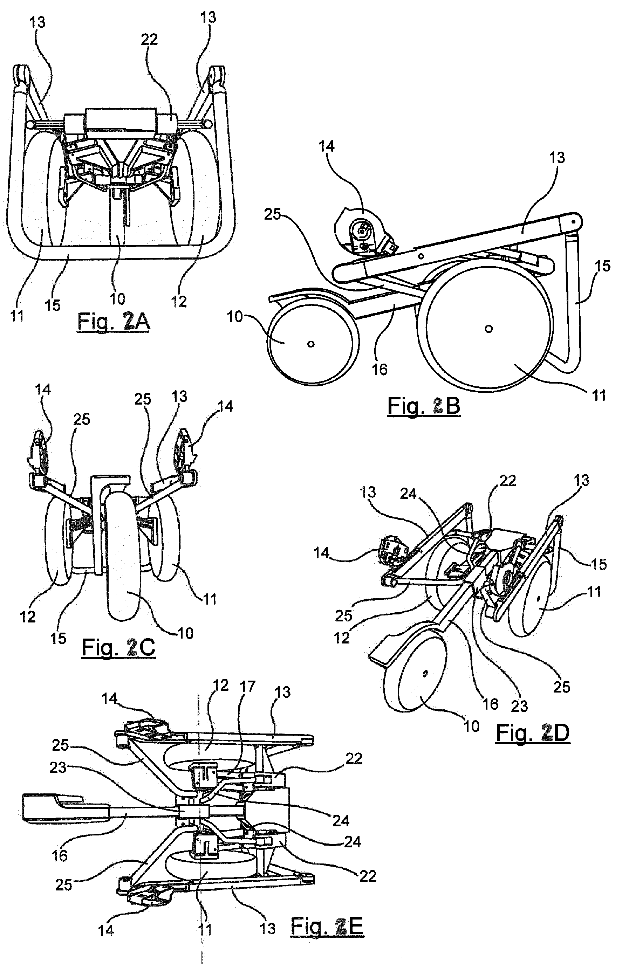

   - figure 2A : vue de derrière ;
   - figure 2B : vue de côté ;
   - figure 2C : vue de devant ;
   - figure 2D : vue de % ;
   - figure 2E : vue de dessus ;

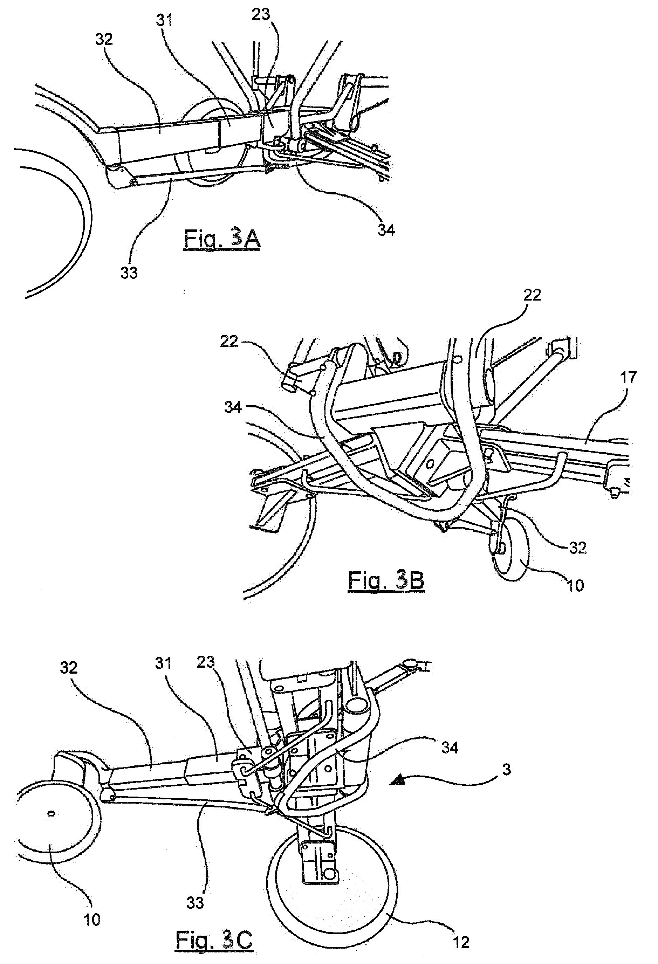

- les figures 3A à 3F présentent châssis selon l'invention:
   - figure 3A : vue partielle des moyens de rétractation de la poutre centrale, en position déployée ;
   - figure 3B : vue partielle de derrière, des moyens contrôlant cette rétractation ;
   - figure 3C : vue des moyens de rétractation, en position déployée ;

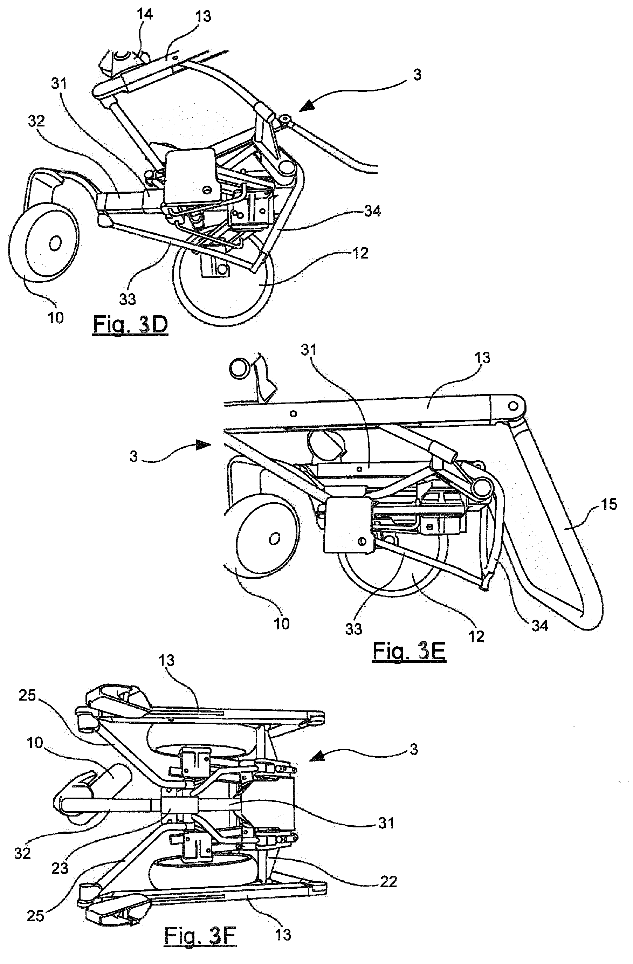

   - figure 3D : vue des moyens de rétractation, en cours de pliage ;
   - figure 3E : vue des moyens de rétractation, en position pliée ;
   - figure 3F : vue de dessus du châssis en position pliée ;

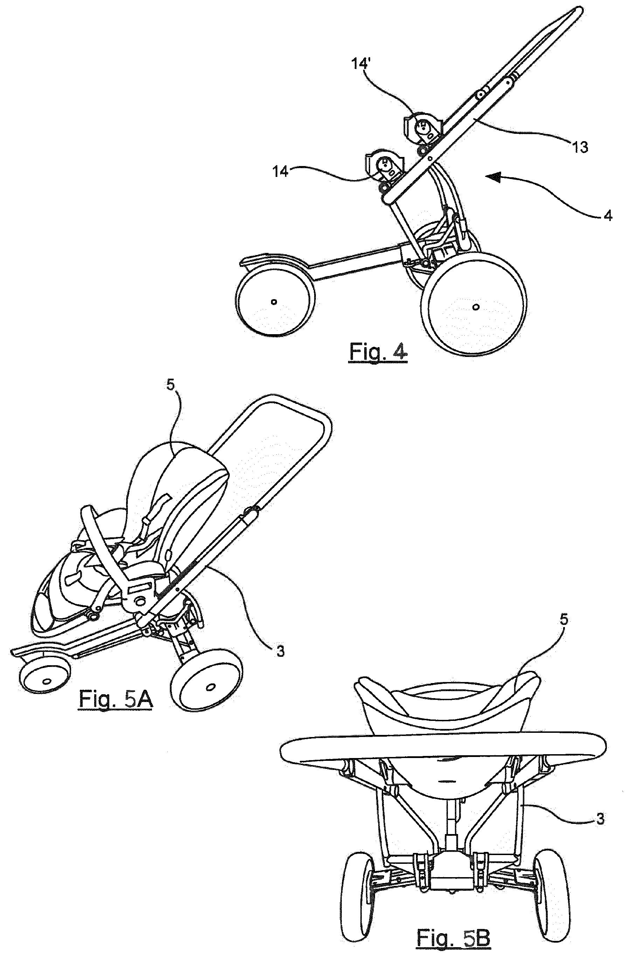

- la figure 4 illustre un aspect optionnel de l'invention selon lequel les moyens de support du dispositif de réception d'un enfant sont réglables en hauteur ;
- les figures 5A et 5B présentent le châssis d'une poussette selon l'invention, équipé d'un siège de transport d'un enfant, respectivement :
   - figure 5A : vue de côté ;
   - figure 5B : vue de derrière ;

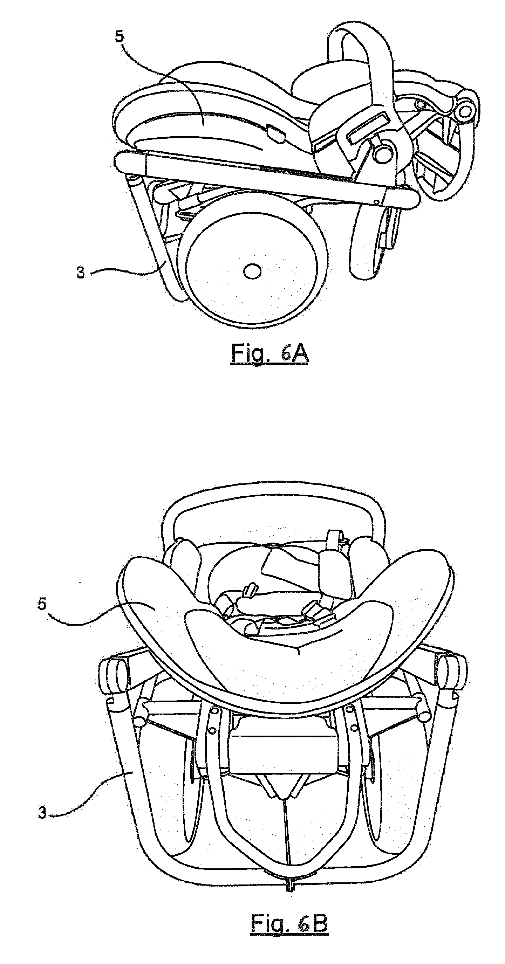

- les figures 6A et 6B illustrent la poussette des figures 5A et 5B, dans sa position de châssis plié, respectivement :
   - figure 6A : vue de côté ;
   - figure 6B : vue de derrière ;

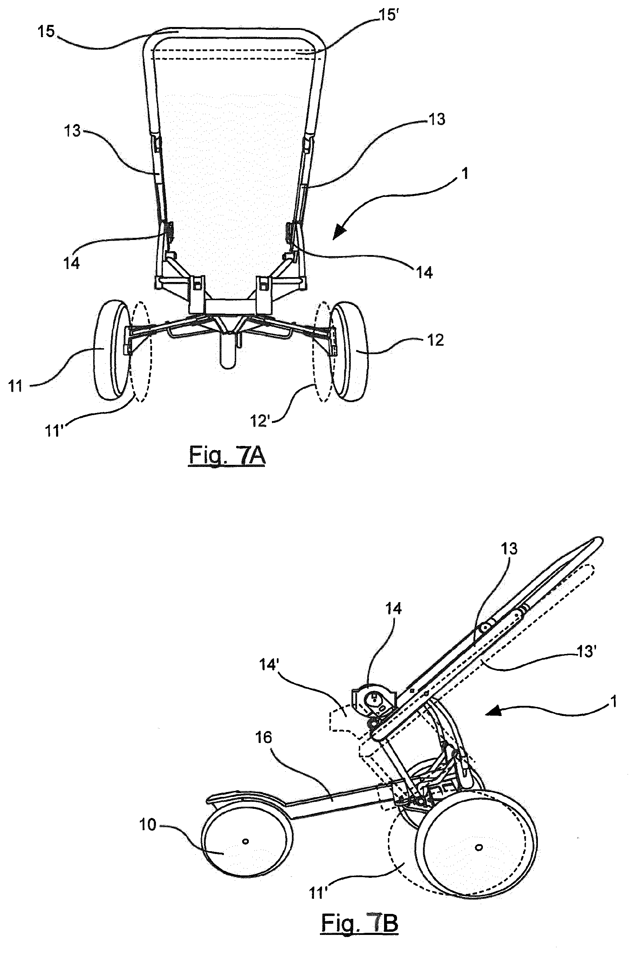

- les figures 7A et 7B illustrent le châssis d'une poussette ne faisant pas partie de l'invention, pouvant prendre deux positions de transport, à savoir une position de transport à écartement maximum des roues arrière et une position de transport à écartement réduit, illustrée en pointillés :
   - figure 7A : châssis vue de derrière ;
   - figure 7B : châssis vue de côté.

### 6. Description de modes de réalisation de l'invention

### 6.1. Principe général de l'invention

L'invention propose donc, selon un premier aspect, une nouvelle approche des poussettes pliantes, et en particulier de leur châssis, présentant une cinématique de pliage et de dépliage particulière, nouvelle et inventive.

Il existe de nombreuses poussettes prévoyant que les roues, et notamment les roues arrière, se rapprochent l'une de l'autre lors du pliage. C'est notamment le cas pour les différentes techniques de pliage en trois dimensions. Cependant, dans ce cas, le pliage agit également sur la partie supérieure du châssis et l'entraxe entre les moyens de support du dispositif de réception d'un enfant varie également.

L'invention propose au contraire, de façon tout à fait avantageuse, une nouvelle technique de pliage, qui permet de rapprocher les roues arrière l'une de l'autre en position pliée, de façon à obtenir un ensemble d'encombrement réduit, tout en conservant l'écartement des moyens de support constant : ceci permet, d'une part, de pouvoir utiliser un hamac rigide, sans qu'il soit nécessaire de le détacher du châssis avant pliage, et d'autre part de relier les poussoirs par une traverse formant guidon. En d'autres termes, l'invention combine une approche de pliage en trois dimensions pour la partie inférieure du châssis, et une approche de pliage en deux dimensions pour la partie supérieure du châssis (à savoir les poussoirs et les moyens de support).

L'invention propose une telle poussette dont la compacité en position pliée est encore accrue, du fait que la roue avant est rétractable.

L'invention propose également, selon un troisième aspect, une telle poussette pouvant prendre au moins deux positions de transport, c'est-à-dire au moins deux positions dans lesquelles un enfant peut être installé et la poussette déplacée. L'écartement des roues, au moins des roues arrière, varie selon ces positions de transport, de façon que la largeur globale de la poussette soit différente dans ces deux positions.

Avantageusement, dans ces différentes positions de transport, la largeur de la partie supérieure du châssis reste en revanche invariable. Ainsi, l'écartement entre les poussoirs est fixe (et ils peuvent donc être reliés par une traverse formant guidon), de même que les moyens de support du dispositif de réception d'un enfant. Ainsi, dans le mode de réalisation illustré par les figures 7A et 7B, qui met en oeuvre des dispositifs de support permettant le retrait du dispositif de réception d'un enfant, et le cas échéant son changement (ici sous la forme d'éléments Moduloclip® selon la technique développée par le Titulaire de la présente demande), l'entraxe de ces deux dispositifs de support Moduloclip® est constant.

Par ailleurs, il est important de noter que l'invention ne concerne pas le fait que l'écartement entre les roues est variable, mais plus précisément le fait qu'il soit possible d'utiliser la poussette, c'est-à-dire de transporter un enfant dans de bonnes conditions de sécurité, dans plusieurs positions de châssis, correspondants à différents écartements des roues arrière, ou voies arrière.

En conséquence, des moyens de verrouillage spécifiques sont prévus, de façon que le châssis puisse être verrouillé dans l'une ou l'autre des positions de transport et qu'il soit possible de passer de l'une à l'autre, ainsi que de l'une des positions de transport à la position pliée.

### 6.2. Châssis dans sa position de transport

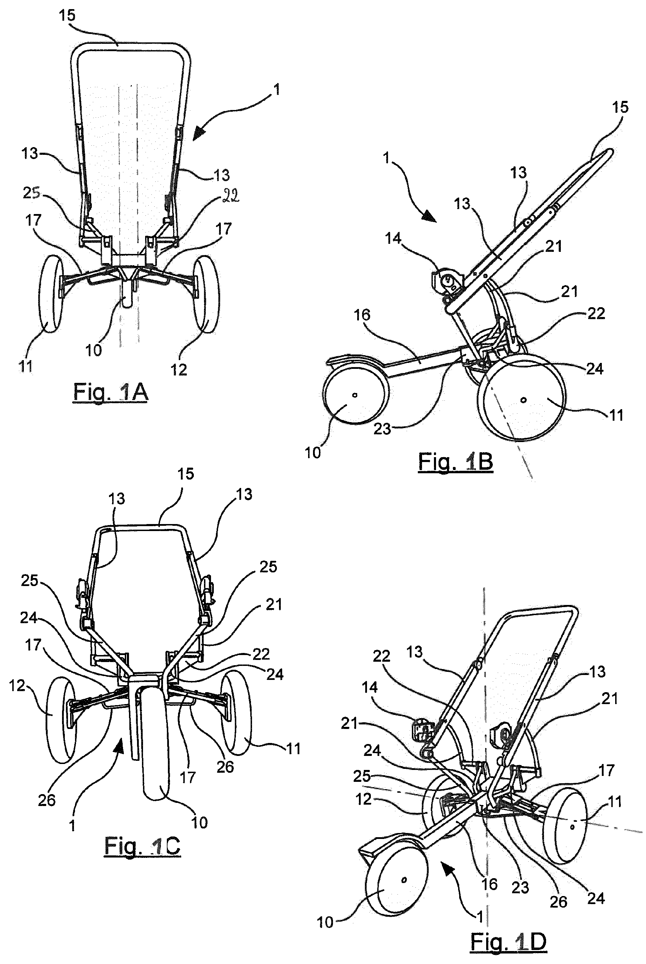

Les figures 1A à 1D illustrent le châssis 1 d'une poussette ne faisant pas partie de l'invention. Ce châssis 1 comporte trois roues : une roue avant 10, une roue arrière gauche 11 et une roue arrière droite 12.

Dans une partie inférieure du châssis 1, la roue avant 10 est portée par l'extrémité avant d'une poutre centrale 16. Les roues arrière 11 et 12 sont chacune portée par l'extrémité distale d'un bras porte roue 17, dont l'extrémité proximale est liée à la poutre centrale 16, à proximité de son extrémité arrière. Les deux bras porte roue 17 sont chacun composés de biellettes formant un parallélogramme, de telle sorte qu'il permettent aux roues 11 et 12 de se déplacer par rapport à la poutre centrale en restant dans un plan parallèle à un plan de référence. Ainsi, dans leurs différentes positions, les roues arrières 11 et 12 restent parallèles l'une à l'autre.

Le châssis comporte également, dans une partie supérieure, deux poussoirs 13, dont les extrémités arrière sont reliées l'une à l'autre par un guidon 15. Dans le mode de réalisation représenté, le guidon 15 présente une forme de U, et les extrémités de ses deux branches sont reliées aux extrémités arrière respectives des deux bras poussoirs par des liaisons pivot coaxiales et verrouillables, de telle sorte que ce guidon 15 puisse prendre plusieurs positions d'inclinaison par rapport aux poussoirs 13.

Les poussoirs 13 portent, à proximité de leur extrémité avant, des éléments de support 14 destinés à porter un dispositif de réception d'un enfant. Ces éléments de support 14 sont, dans le mode de réalisation représenté, des éléments de verrouillage du type commercialisés sous le nom « Moduloclip » (marque déposée) par la demanderesse, qui permettent la fixation amovible d'une large gamme de dispositifs de réception d'un enfant : nacelle, coque, siège...

La partie supérieure du châssis, comprenant notamment les deux poussoirs 13, est liée à la partie inférieure, comprenant notamment les roues et la poutre centrale 16, par des moyens de pliage permettant à l'utilisateur de contrôler le pliage du châssis 1 depuis le guidon. Ainsi, des leviers 21 sont assemblés de façon pivotante, par leur première extrémité, à chacun des poussoirs 13. Les secondes extrémités de ces leviers 21 sont liées fixement à une chape 22, qui est montée pivotante à l'extrémité arrière de la poutre centrale 16, selon un axe horizontal perpendiculaire à l'axe longitudinal de la poutre centrale 16.

Un coulisseau 23 est monté coulissant le long de la poutre centrale 16. Ce coulisseau 23 est lié par deux biellettes 24 à la chape 22, par deux biellettes 25 aux extrémités avant des poussoirs 13, et par deux biellettes 26 aux bras porte roue 17.

Les deux biellettes 26 reliant le coulisseau 23 aux deux bras porte-roue 17 forment les moyens de réglage permettant de faire varier l'écartement entre les roues arrière 11 et 12 : ces deux biellettes 26 sont mobiles en rotation par rapport au coulisseau autour d'un axe sensiblement vertical passant par le point de fixation de la biellette au coulisseau illustré en traits mixtes sur les figures 1A et 1D.

Les deux biellettes 25 reliant le coulisseau 23 aux extrémités avant des poussoirs 13 forment les moyens d'articulation avant des poussoirs : elles sont mobiles en rotation par rapport au coulisseau autour d'un axe sensiblement horizontal et perpendiculaire à l'axe longitudinal de la poutre 16, illustré en traits mixtes sur les figures 1D, 1B et 2E. Cet axe passe par le point de fixation de la biellette au coulisseau.

Les deux biellettes 24 reliant le coulisseau 23 à la chape 22 forment les moyens d'articulation arrière des poussoirs : elles sont mobiles en rotation par rapport au coulisseau autour d'un axe sensiblement horizontal et perpendiculaire à l'axe longitudinal de la poutre 16, illustré en traits mixtes sur les figures 1D, 1B et 2E. Cet axe passe par le point de fixation de la biellette au coulisseau.

Un dispositif de verrouillage adapté est intégré au châssis 1. Ce dispositif de verrouillage peut par exemple être constitué par un pion mobile intégré au coulisseau 23 et pouvant s'engager dans différents trous correspondant percés dans la poutre centrale 16, de façon à verrouiller la position du coulisseau par rapport à la poutre centrale. En effet, quand la position du coulisseau 23 est fixée, les biellettes 24, 25 et 26 maintiennent les roues arrière 11 et 12 et les poussoirs 13 dans une position fixe par rapport à la poutre centrale 16.

Inversement, en position déverrouillée, le déplacement du coulisseau contrôle l'écartement entre les roues arrière et la position des poussoirs par rapport à la poutre centrale.

### 6.3. Le châssis dans sa position pliée

Pour le passage de la position de transport représentée par les figures 1A à 1D à une position pliée, il est donc nécessaire que la position du coulisseau 23 sur la poutre 16 ne soit pas verrouillée. Le système de déverrouillage étant actionné, le déplacement des poussoirs 13 vers l'avant entraîne la rotation vers l'avant des leviers 21 et de la chape 22 qui leur est liée. La chape 22, en pivotant vers l'avant, pousse vers l'avant le coulisseau 23, par l'intermédiaire des biellettes 24.

En se déplaçant vers l'avant, le coulisseau 23 entraîne, par l'intermédiaire des biellettes 26, le déplacement des bras porte roue 17 vers l'avant, ce qui a pour effet de rapprocher l'une de l'autre les roues 11 et 12. Il est à noter que ce rapprochement des roues se fait sans modifier l'écartement entre les éléments de support 14. Le changement de position du châssis 1 peut donc se faire sans retirer le dispositif de réception d'un enfant.

Le déplacement du coulisseau 23 entraîne également, par l'intermédiaire des biellettes 25 qui pivotent autour d'un axe sensiblement horizontal perpendiculaire à l'axe longitudinal de poutre centrale 16, la rotation de l'extrémité avant des poussoirs.

Quand le coulisseau 23 atteint sa position extrême, vers l'avant de la poutre centrale 16, le châssis 1 prend sa position pliée représentée par les figures 2A à 2E. Dans cette position, les roues arrière 11 et 12 sont très rapprochées de la poutre centrale 16, les bras porte roue 17 étant presque parallèles à cette poutre centrale 16. Ainsi, l'écartement de ces deux roues arrière est inférieur à l'écartement entre les poussoirs 13. Ces poussoirs 13 sont eux-mêmes ramenés à proximité de la poutre centrale 16, et s'étendent parallèlement à celle-ci. Comme le représentent les figures, le guidon 15 peut être plié, par rapport aux poussoirs 13, de façon à améliorer la compacité du châssis.

Cette position compacte permet le rangement de la poussette, ou son transport, dans de bonnes conditions.

### 6.4. Châssis à train avant rétractable

Les figures 3A à 3F représentent un châssis selon l'invention. Sur ce châssis 3, la quasi totalité des éléments sont identiques à ceux du châssis 1 (et portent les mêmes références). Seule, la poutre centrale 16 du châssis 1 a été remplacée, sur le châssis 3, par une poutre centrale télescopique, rétractable, composée d'une portion arrière de poutre 31 dans laquelle peut coulisser une portion avant de poutre 32.

La portion avant de poutre 32 porte, à son extrémité avant, la roue avant 10. Son extrémité arrière est engagée dans une ouverture de l'extrémité avant de la portion arrière de poutre 31, de manière à pouvoir y coulisser. La portion arrière de poutre 31 est liée, à proximité de son extrémité arrière, à la chape 22 et aux bras porte roue 17, et permet le coulissement du coulisseau 23. La longueur de cette portion arrière de poutre 31 est choisie de telle sorte que le coulissement du coulisseau 23 entre ses positions extrêmes se fasse sur cette portion de poutre. Ainsi, la cinématique de pliage du châssis 3 est identique à celle qui a été décrite ci dessus en relation avec le châssis 1, à l'exception du mécanisme de pliage de la poutre centrale télescopique qui est décrit ci-après.

Dans la position de transport du châssis 3, qui est représentée par les figures 3A à 3C, la poutre centrale télescopique formé par la portion avant de poutre 32 et la portion arrière de poutre 31 est dans une position déployée, et présente une longueur sensiblement identique à celle de la poutre centrale 16 du châssis 1. Pour maintenir les deux portions de poutre dans cette position, un levier inférieur 34 est lié fixement à la chape 22 et s'étend sous une partie arrière de la portion arrière de poutre 31. L'extrémité avant de ce levier inférieur est lié à l'extrémité arrière d'une biellette 33, dont l'extrémité avant est liée à la portion avant de poutre 32, à proximité de son extrémité avant. Dans la position de transport du châssis 3, ce levier inférieur 34 et la biellette 33 maintiennent les portions de poutre 31 et 32 dans une position fixe.

Le passage du châssis de sa position de transport vers une position pliée entraîne le pivotement de la chape 22, qui entraîne en rotation le levier inférieur 34. Ainsi, sur la figure 3D qui représente le châssis 3 dans une position intermédiaire (la roue 11 n'est pas représentée, sur les figures 3C à 3E, pour améliorer la visibilité des éléments du châssis), le levier 34 est dans une position plus en arrière que dans la position de transport. Ce levier inférieur 34, par l'intermédiaire de la biellette 33 tire alors vers l'arrière la portion avant de poutre 32, qui coulisse de façon télescopique dans la portion arrière de poutre 31.

On notera que cette position intermédiaire illustrée en figure 3D correspond également à une position dite « à écartement réduit » dans le mode de réalisation particulier de l'invention illustré par les figures 7A et 7B d'une poussette pouvant prendre plusieurs positions de transport.

Dans la position pliée du châssis représentée par les figures 3E et 3F, la portion avant de poutre 32 est enfoncée au maximum dans la portion arrière de poutre 31, en entraînant vers l'arrière la roue avant 10. La poutre centrale rétractable est alors dans sa position pliée, et le châssis 3 présente alors une très bonne compacité, supérieure à celle du châssis 1 dans sa position pliée.

Comme indiqué précédemment, cette cinématique particulière peut être mise en oeuvre, dans d'autres modes de réalisation, sur des poussettes présentant une autre cinématique générale de pliage du châssis (et notamment de sa partie supérieure, i.e. des poussoirs), ainsi que sur des poussettes proposant une ou plusieurs position(s) de transport.

### 6.5. Réglage en hauteur des moyens de support du dispositif de réception d'un enfant

La figure 4 représente un châssis 4 quasi identique au châssis 1 décrit précédemment. Sur ce châssis 4, les poussoirs 13 portent chacun un élément de support 14, destiné à porter un dispositif de réception d'un enfant, qui est monté coulissant le long du poussoir 13. Ainsi, cet élément de support peut prendre la position référencée 14, représentée sur la figure 4, dans laquelle il est placé relativement bas, vers l'avant du châssis. Il peut également prendre une position référencée 14' sur la figure 4, dans laquelle il est placé plus haut, et plus vers l'arrière du châssis. Ce montage coulissant peut être obtenu en montant les éléments de support 14 sur des coulisseaux en T engagés dans des glissières correspondantes prévues sur les poussoirs 13. Des moyens de verrouillage adaptés permettent de bloquer les éléments de support 14 dans la position désirée. Ce choix de position des éléments de support 14 permet d'adapter au mieux la poussette aux différents dispositifs de réception d'un enfant.

### 6.6. Poussette comprenant un tel châssis

Les figures 5A et 5B représentent une poussette formée par le châssis 3, dans sa position de transport représentée par les figures 3A à 3C, sur lequel est monté un siège 5. Les figures 6A et 6B représentent cette même poussette quand le châssis 3 est dans sa position pliée représentée par les figures 3E et 3F.

### 6.7. Poussettes à plusieurs positions de transport

On présente désormais, en relation avec les figures 7A et 7B, une poussette pouvant prendre plusieurs positions de transport d'un enfant. Sur ces figures 7A et 7B, le châssis 1 est représenté dans une position de transport appelée par la suite « position d'écartement maximum », dans laquelle les roues arrière sont dans un écartement maximum. Par ailleurs, certains des éléments de ce châssis sont également représentés, en pointillés, dans une deuxième position de transport appelée par la suite « position d'écartement réduit », dans laquelle l'écartement des roues est plus faible que dans la position d'écartement maximum.

Comme on le voit sur la figure 7A, présentant le châssis vu de derrière, l'écartement entre les roues arrières 11 et 12 est important dans la position d'écartement maximum, par exemple de l'ordre de 70 cm. Ceci permet de conférer à la poussette une très bonne stabilité. Les roues arrière de ce châssis sont également représentées, en pointillés, dans la position d'écartement réduit, et numérotées 11' et 12'. Comme le montre la figure 7A, l'écartement entre les roues 11' et 12' (encore appelé « voie arrière ») est alors réduit, ce qui est mieux adapté à un usage urbain, au détriment d'une perte relative en terme de stabilité.

Les deux poussoirs 13 du châssis 1, de même que les deux éléments de support 14 destinés à porter un dispositif de réception d'un enfant, gardent un écartement identique dans les positions d'écartement maximum et d'écartement réduit. Ainsi, les même dispositifs de réception d'un enfant (siège, coque, etc.) peuvent être utilisés dans les deux positions, et les deux bras poussoir peuvent être reliés par un guidon 15.

En revanche, du fait de la cinématique particulière du châssis selon ce mode de réalisation (détaillée précédemment dans ce document), on peut noter que la partie supérieure du châssis est plus basse dans la position à écartement réduit que dans la position d'écartement maximum. Ainsi, sur les figures 7A et 7B, les poussoirs 13, les éléments de support 14 et le guidon 15 sont également représentés, en pointillés, dans la position d'écartement réduit du châssis, dans laquelle ils sont numérotés respectivement 13', 14' et 15'. Dans cette position d'écartement réduit du châssis, ces éléments sont plus bas, de 3 à 5 cm, par rapport à la position d'écartement maximum.

En conséquence, dans la position d'écartement réduit, le dispositif de réception d'un enfant est également abaissé, ce qui permet d'abaisser le centre de gravité de la poussette, et de compenser au moins en partie la perte de stabilité due à la réduction de la voie arrière. Inversement, dans la position d'écartement maximum, le dispositif de réception d'un enfant est légèrement surélevé, et donc rapproché du pousseur, ce qui permet au pousseur d'obtenir un meilleur contact visuel avec l'enfant.

Des moyens de verrouillage, connus en eux même de l'homme du métier, permettent de verrouiller le châssis 1 dans sa position d'écartement maximum et dans sa position d'écartement réduit. Des commandes de déverrouillage correspondantes peuvent être placées par exemple au niveau du guidon 15, pour être actionnées d'une main.

Selon une approche particulière, on peut prévoir que l'action de l'utilisateur sur ces commandes de déverrouillage, quand le châssis est dans sa position d'écartement maximum, permette le passage dans la position d'écartement réduit, puis qu'une nouvelle action sur ces commandes de déverrouillage permette de plier la poussette. Inversement, selon cette approche, lors du dépliage (c'est-à-dire à partir de la position pliée) le châssis se verrouille d'abord dans la position d'écartement réduit. A partir de cette position, une action sur les commandes de déverrouillage permet de passer à la position d'écartement maximum. D'autres approches sont bien sûr envisageables.

Par ailleurs, plus de deux positions de transport peuvent être prévues. Par exemple, en plus de la position d'écartement maximum et de la position d'écartement réduit, on peut prévoir une position d'écartement minimum des roues arrière (dans laquelle cet écartement est inférieure à l'écartement réduit), permettant ponctuellement, le franchissement d'un passage très étroit (par exemple l'entrée de la poussette dans un ascenseur).

## Revendications

1. Châssis (3) pliant pour poussette portant deux roues arrière (11, 12) et au moins une roue avant (10), au moins un poussoir (13) et des moyens de support (14) d'un dispositif de réception d'un enfant, ledit châssis (3) étant configuré de façon à pouvoir prendre :
- au moins une position de transport d'un enfant ;
- au moins une position pliée, dans laquelle lesdites roues arrière sont rapprochées l'une de l'autre, mais l'écartement entre lesdits moyens de support reste constant ;
ledit châssis (3) présentant une poutre, portant la ou lesdites roues avant, le long de laquelle peut se déplacer un coulisseau (23), le déplacement dudit coulisseau contrôlant :
- d'une part, des moyens de réglage (26) permettant de faire varier l'écartement entre lesdites roues arrière (11, 12), mobiles en rotation par rapport audit coulisseau autour d'un axe sensiblement vertical ;
- d'autre part, des moyens d'articulation (24, 25) agissant sur ledit au moins un poussoir (13), mobiles en rotation par rapport audit coulisseau (23) autour d'au moins un axe sensiblement horizontal, ledit châssis (3) étant **caractérisé en ce que** ladite poutre est composée d'au moins deux portions (31, 32) de poutre mobiles l'une par rapport à l'autre, de façon à pouvoir prendre un état rétracté, dans lequel la ou lesdites roues avant sont rapprochées des roues arrière, lorsque ledit châssis (3) est dans la position pliée, et un état déployé, lorsque ledit châssis (3) est dans une position de transport.

2. Châssis (3) selon la revendication 1, **caractérisé en ce que** lesdites portions (31, 32) de poutre sont assemblées de façon coulissante, de façon à former une poutre télescopique. J

3. Châssis (3) selon l'une quelconque des revendications 1 et 2, **caractérisé en ce que** le déplacement de la portion (32) de poutre portant la roue avant est contrôlé par un levier (34) solidaire d'une chape mobile en rotation, par l'intermédiaire d'une biellette (33).

4. Châssis (3) selon l'une quelconque des revendications 1 à 3, **caractérisé en ce que** chacune desdites roues arrière (11, 12) est portée par un bras porte-roue (17) constitué d'un parallélogramme.

5. Châssis (3) selon la revendication 4, **caractérisé en ce que** lesdits moyens de réglage comprennent deux biellettes (26), reliées chacune à l'un desdits bras porte-roue arrière (17).

6. Châssis (3) selon l'une quelconque des revendications 1 à 5, **caractérisé en ce que** le passage d'une position à l'autre dudit châssis (3) est contrôlé par le déplacement du ou desdits poussoirs (13).

7. Châssis (3) selon l'une quelconque des revendications 1 à 6, **caractérisé en ce que** lesdits moyens d'articulation (24, 25) comprennent :
• des moyens d'articulation avant comprenant deux biellettes (25) reliant chacune une extrémité avant de l'un desdits poussoirs (13) audit coulisseau (23) ;
• des moyens d'articulation arrière comprenant deux biellettes (24) reliées chacune audit coulisseau (23).

8. Châssis (3) selon la revendication 7, **caractérisé en ce que** lesdites biellettes (24) desdits moyens d'articulation arrière relient ledit coulisseau (23), de chaque côté dudit châssis (3), à une chape (22) mobile en rotation, un levier (21) solidaire de ladite chape reliant ladite chape (22) à l'un desdits poussoirs (13).

9. Châssis (3) selon l'une quelconque des revendications 1 à 8, **caractérisé en ce que**, dans ladite position pliée, le ou lesdits poussoirs (13) sont sensiblement parallèles à ladite poutre.

10. Châssis (3) selon l'une quelconque des revendications 1 à 9, **caractérisé en ce que** le ou lesdits poussoirs (13) portent un guidon pliable (15), à l'aide d'articulations et/ou de moyens télescopiques, de façon à limiter l'encombrement dudit châssis (3) dans ladite position pliée.

11. Châssis (3) selon l'une quelconque des revendications 1 à 10, **caractérisé en ce que** lesdits moyens de support (14) peuvent prendre au moins deux hauteurs distinctes par rapport au(x)dit(s) poussoir(s) (13).

12. Châssis (3) selon la revendication 11, **caractérisé en ce que** lesdits moyens de support (14) sont coulissants le long de glissières prévues à cet effet sur le(s)dit(s) poussoir(s).

13. Châssis (3) selon l'une quelconque des revendications 1 à 12, **caractérisé en ce qu'**il est configuré de façon à pouvoir prendre au moins deux positions de transport d'un enfant, sélectionnables par un utilisateur, dans lesquelles l'écartement entre lesdits moyens de support (14) est constant mais l'écartement entre lesdites roues arrière (11, 12) est différent, dont une position de transport à écartement maximum desdites roues et une position de transport à écartement réduit desdites roues, ledit châssis (3) comprenant des moyens de verrouillage permettant de maintenir ledit châssis (3) dans l'une ou l'autre desdites positions de transport.

14. Châssis (3) selon la revendication 13, **caractérisé en ce qu'**il est configuré de façon que la hauteur desdits moyens de support (14) par rapport au sol varie selon la position de transport sélectionnée, de façon à abaisser le centre de gravité de la poussette lorsque ledit châssis (3) passe de la position de transport à écartement maximum à une position de transport à écartement réduit.

15. Châssis (3) selon l'une quelconque des revendications 13 et 14, **caractérisée en ce que** lesdits moyens de verrouillage sont prévus entre ledit coulisseau et ladite poutre et/ou entre ladite chape et au moins une des biellettes qui lui est connectée.

16. Poussette présentant un châssis (3) selon l'une quelconque des revendications 1 à 15 munie d'un dispositif de réception d'un enfant.

## Patentansprüche

1. Zusammenklappbares Gestell (3) für einen Kinderwagen, das zwei Hinterräder (11, 12) und wenigstens ein Vorderrad (10), wenigstens eine Druckstange (13) und Haltemittel (14) einer Vorrichtung zur Aufnahme eines Kindes aufweist, wobei das Gestell (3) derart eingerichtet ist, dass es einnehmen kann:
- wenigstens eine Stellung zum Transport eines Kindes;
- wenigstens eine zusammengeklappte Stellung, in der die Hinterräder aneinander angenähert sind, aber der Abstand zwischen den Haltemitteln konstant bleibt;
wobei das Gestell (3) einen Träger aufweist, der das oder die Vorderräder trägt, entlang dem sich ein Schieber (23) verlagern kann, wobei das Verlagern des Schiebers steuert:
- auf der einen Seite Einstellmittel (26), die ermöglichen, dass der Abstand zwischen den Hinterrädern (11,12) variiert wird, und die in Bezug auf den Schieber um eine im Wesentlichen vertikale Achse drehbeweglich sind;
- auf der anderen Seite von Gelenkmitteln (24, 25), die auf die wenigstens eine Druckstange (13) wirken und in Bezug auf den Schieber (23) um wenigstens eine im Wesentlichen horizontale Achse drehbeweglich sind,
wobei das Gestell (3) **dadurch gekennzeichnet ist, dass** der Träger aus wenigstens zwei Trägerabschnitten (31, 32) zusammengesetzt ist, die bezüglich einander derart bewegbar sind, dass sie einen eingezogenen Zustand, in dem das oder die Vorderräder den Hinterrädern angenähert sind, wenn sich das Gestell (3) in der zusammengeklappten Stellung befindet, und einen ausgefahrenen Zustand, wenn sich das Gestell (3) in einer Stellung zum Transport befindet, einnehmen können.

2. Gestell (3) nach Anspruch 1, **dadurch gekennzeichnet, dass** die Trägerabschnitte (31, 32) verschiebbar montiert sind, um einen Teleskopträger zu bilden.

3. Gestell (3) nach einem der Ansprüche 1 und 2, **dadurch gekennzeichnet, dass** das Verlagern des Trägerabschnittes (32), der das Vorderrad trägt, durch einen Hebel (34), der mit einer Kappe drehbeweglich verbunden ist, über ein Gestänge (33) gesteuert wird.

4. Gestell (3) nach einem der Ansprüche 1 bis 3, **dadurch gekennzeichnet, dass** jedes der Hinterräder (11,12) durch einen Radträgerarm (17), der aus einem Parallelogramm gebildet ist, getragen wird.

5. Gestell (3) nach Anspruch 4, **dadurch gekennzeichnet, dass** die Einstellmittel zwei Gestänge (26) aufweisen, die jeweils an einem der Hinterradträgerarme (17) befestigt sind.

6. Gestell (3) nach einem der Ansprüche 1 bis 5, **dadurch gekennzeichnet, dass** der Übergang von einer Stellung des Gestells (3) in die andere durch das Verlagern der Druckstange oder der Druckstangen (13) gesteuert wird.

7. Gestell (3) nach einem der Ansprüche 1 bis 6, **dadurch gekennzeichnet, dass** die Gelenkmittel (24, 25), aufweisen:
- vordere Gelenkmittel umfassend zwei Gestänge (25), die jeweils ein vorderes Ende einer der Druckstangen (13) an dem Schieber (23) befestigen;
- hintere Gelenkmittel umfassend zwei Gestänge (24), die jeweils an dem Schieber (23) befestigt sind.

8. Gestell (3) nach Anspruch 7, **dadurch gekennzeichnet, dass** die Gestänge (24) der hinteren Gelenkmittel den Schieber (23), von jeder Seite des Gestells (3), drehbeweglich mit einer Kappe (22) befestigen, wobei ein mit der Kappe verbundener Hebel (21) die Kappe (22) an einer der Druckstangen (13) befestigt.

9. Gestell (3) nach einem der Ansprüche 1 bis 8, **dadurch gekennzeichnet, dass** die Druckstange oder die Druckstangen (13) in der zusammengeklappten Stellung im Wesentlichen parallel zu dem Träger sind.

10. Gestell (3) nach einem der Ansprüche 1 bis 9, **dadurch gekennzeichnet, dass** die Druckstange oder die Druckstangen (13) einen mithilfe von Gelenken und/oder von Teleskopmitteln zusammenklappbaren Lenker (15) tragen, um einen Platzbedarf des Gestells (3) in der zusammengeklappten Stellung zu beschränken.

11. Gestell (3) nach einem der Ansprüche 1 bis 10, **dadurch gekennzeichnet, dass** die Haltemittel (14) wenigstens zwei verschiedene Höhen in Bezug auf die Druckstange(n) (13) einnehmen können.

12. Gestell (3) nach Anspruch 11, **dadurch gekennzeichnet, dass** die Haltemittel (14) entlang von Gleitführungen verschiebbar sind, die zu diesem Zweck auf der/den Druckstange(n) vorgesehen sind.

13. Gestell (3) nach einem der Ansprüche 1 bis 12, **dadurch gekennzeichnet, dass** es derart eingerichtet ist, um wenigstens zwei Stellungen zum Transport eines Kindes einzunehmen, die von einem Benutzer auswählbar sind, in welchen der Abstand zwischen den Haltemitteln (14) konstant ist, aber der Abstand zwischen den Hinterrädern (11, 12) verschieden ist, wobei die Stellungen eine Stellung zum Transport mit maximalem Abstand der Räder und eine Stellung zum Transport mit verringertem Abstand der Räder umfassen, wobei das Gestell (3) Verriegelungsmittel aufweist, die ermöglichen, dass das Gestell (3) in der einen oder der anderen der Stellungen zum Transport gehalten wird.

14. Gestell (3) nach Anspruch 13, **dadurch gekennzeichnet, dass** es derart eingerichtet ist, dass die Höhe der Haltemittel (14) in Bezug auf den Boden gemäß der ausgewählten Stellung zum Transport variiert, derart, dass das Zentrum der Schwerkraft des Kinderwagens abgesenkt wird, wenn das Gestell (3) von der Stellung zum Transport mit maximalem Abstand in eine Stellung zum Transport mit verringertem Abstand übergeführt wird.

15. Gestell (3) nach einem der Ansprüche 13 und 14, **dadurch gekennzeichnet, dass** die Verriegelungsmittel zwischen dem Schieber und dem Träger und/oder zwischen der Kappe und wenigstens einem der Gestänge, mit dem sie verbunden ist, vorgesehen sind.

16. Kinderwagen mit einem Gestell (3) nach einem der Ansprüche 1 bis 15, das mit einer Vorrichtung zur Aufnahme eines Kindes ausgestattet ist.

## Claims

1. Folding frame (3) for a baby stroller, said frame carrying two rear wheels (11, 12) and at least one front wheel (10), at least one push-rod (13) and means (14) for supporting a device for accommodating a child, the said frame (3) being configured so as to be capable of assuming:
- at least one child-transporting position;
- at least one folded position, in which the said rear wheels are brought closer to one another, but the space between the said supporting means remains constant;
the said frame (3) having a beam which carries the said front wheel or wheels and along which a slide (23) can be displaced, the displacement of the said slide controlling:
- on the one hand, adjusting means (26) which make it possible to vary the space between the said rear wheels (11, 12) and which are movable in rotation in relation to the said slide about a substantially vertical axis;
- on the other hand, articulating means (24, 25) which act on the said at least one push-rod (13) and which are movable in rotation in relation to the said slide (23) about at least one substantially horizontal axis;
the said frame (3) being **characterised in that** the said beam is composed of at least two beam portions (31, 32) which are movable in relation to one another, so as to be capable of assuming a retracted state, in which the said front wheel or wheels is/are brought closer to the rear wheels, when the said frame (3) is in the folded position, and an opened-out state, when the said frame (3) is in a transporting position.

2. Frame (3) according to Claim 1, **characterised in that** the said beam portions (31, 32) are joined together in a sliding manner so as to form a telescopic beam.

3. Frame (3) according to either of Claims 1 or 2, **characterised in that** the displacement of the beam portion (32) carrying the front wheel is controlled by a lever (34) integral with a yoke which is movable in rotation, via a connecting rod (33).

4. Frame (3) according to any one of Claims 1 to 3, **characterised in that** each of the said rear wheels (11, 12) is carried by a wheel-carrying arm (17) made up of a parallelogram.

5. Frame (3) according to Claim 4, **characterised in that** the said adjusting means comprise two connecting rods (26) which are each connected to one of the said rear wheel-carrying arms (17).

6. Frame (3) according to any one of Claims 1 to 5, **characterised in that** the changeover from one position of the said frame (3) to the other is controlled by the displacement of the said push-rod or rods (13).

7. Frame (3) according to any one of Claims 1 to 6, **characterised in that** the said articulating means (24, 25) comprise:
- front articulating means comprising two connecting rods (25) each connecting a front end of one of the said push-rods (13) to the said slide (23);
- rear articulating means comprising two connecting rods (24) each connected to the said slide (23).

8. Frame (3) according to Claim 7, **characterised in that** the said connecting rods (24) of the said rear articulating means connect the said slide (23), on each side of the said frame (3), to a yoke (22) which is movable in rotation, a lever (21) which is integral with the said yoke connecting the said yoke (22) to one of the said push-rods (13).

9. Frame (3) according to any one of Claims 1 to 8, **characterised in that**, in the said folded position, the said push-rod or push-rods (13) is/are substantially parallel to the said beam.

10. Frame (3) according to any one of Claims 1 to 9, **characterised in that** the said push-rod or push-rods (13) carries/carry a handlebar (15) which is foldable, with the aid of joints and/or telescopic means, so as to limit the size of the said frame (3) in the said folded position.

11. Frame (3) according to any one of Claims 1 to 10, **characterised in that** the said supporting means (14) are capable of assuming at least two distinct heights in relation to the said push-rod(s) (13).

12. Frame (3) according to Claim 11, **characterised in that** the said supporting means (14) slide along guides provided for that purpose on the said push-rod(s) (13).

13. Frame (3) according to any one of Claims 1 to 12, **characterised in that** it is configured so as to be capable of assuming at least two child-transporting positions which can be selected by a user and in which the space between the said supporting means (14) is constant but the space between the said rear wheels (11, 12) is different, including a transporting position with maximum space between the said wheels and a transporting position with a small space between the said wheels, the said frame (3) comprising locking means which make it possible to keep the said frame (3) in one or other of the said transporting positions.

14. Frame (3) according to Claim 13, **characterised in that** it is configured in such a way that the height of the said supporting means (14) in relation to the ground varies according to the transporting position selected, so as to lower the centre of gravity of the stroller when the said frame (3) changes over from the transporting position with maximum space to a transporting position with a small space.

15. Frame (3) according to either of Claims 13 or 14, **characterised in that** the said locking means are provided between the said slide and the said beam and/or between the said yoke and at least one of the connecting-rods connected to it.

16. Stroller having a frame (3) according to any one of Claims 1 to 15, said stroller being fitted with a device for accommodating a child.
